# EUROPÄISCHE PATENTSCHRIFT

(11) **EP 1 165 350 B1**
(45) Veröffentlichungstag und Bekanntmachung des Hinweises auf die Patenterteilung: **05.11.2003**
(21) Anmeldenummer: 00910835.8
(22) Anmeldetag: 15.03.2000
(51) Int. Cl.: B60R 22/30, A44B 11/25

(54) **SICHERHEITSGURTANORDNUNG MIT INDIVIDUELLEN GURTAUTOMATEN FÜR SCHULTER- UND BECKENGURT**
SAFETY BELT ASSEMBLY WITH INDIVIDUAL BELT RETRACTORS FOR THE SHOULDER BELT AND LAP BELT
ENSEMBLE CEINTURE DE SECURITE AVEC DEROULEURS AUTOMATIQUES INDIVIDUELS DE CEINTURE AU NIVEAU DES EPAULES ET AU NIVEAU DU BASSIN

(30) Priorität: 03.04.1999 DE 19915275
(43) Veröffentlichungstag der Anmeldung: 02.01.2002
(73) Patentinhaber: Volkswagen Aktiengesellschaft, 38436 Wolfsburg (DE)
(72) Erfinder: RITTERS, Ernst-Wilhelm, D-38108 Braunschweig (DE); MÖKER, Carsten, D-38471 Rühen (DE)
(74) Vertreter: Liebl, Thomas, Dipl.-Ing.
(86) Internationale Anmeldenummer: EP0002268
(87) Internationale Veröffentlichungsnummer: WO00059757

(56) Entgegenhaltungen:
- CA-A- 2 209 200
- CH-A- 596 013
- FR-A- 2 468 382
- US-A- 3 583 764
- US-A- 4 915 413
- PATENT ABSTRACTS OF JAPAN vol. 016, no. 422 (M-1305), 4. September 1992 (1992-09-04) & JP 04 143148 A (NISSAN MOTOR CO LTD), 18. Mai 1992 (1992-05-18)

## Beschreibung

Die Erfindung betrifft eine Sicherheitsgurtanordnung gemäß dem Oberbegriff des Patentanspruchs 1. Derartige Sicherheitsgurtanordnungen sind beispielsweise aus US-A-3583764 bekannt und bei Kraftfahrzeugen amerikanischer Fahrzeughersteller für sogenannte Integralsitze im Einsatz. Bei derartigen Sitzen sind der dem Schultergurt zugeordnete Gurtautomat seitlich an der Rückenlehne des Sitzes und der dem Beckengurt zugeordnete Gurtautomat am eigentlichen Sitz festgelegt. Es sei darauf hingewiesen, daß im Rahmen der Erfindung auch ein Sicherheitsgurtsystem Verwendung finden kann, dessen dem Schultergurt zugeordneter Gurtautomat an einer Säule des Fahrzeugs, beispielsweise einer B-Säule, gelagert ist.

An dieser Stelle sei ferner eingefügt, daß unter einem Gurtautomaten im Sinne der Erfindung übliche Gurtaufroll- und -spannautomaten verstanden werden.

Gattungsgemäße Sicherheitsgurtanordnungen bieten zwar Betriebsvorteile durch das Vorsehen individueller Gurtautomaten für Schulter- und Beckengurt, jedoch erschwert insbesondere die Tatsache, daß beiden Gurten ein gemeinsames Gurtschloß zugeordnet ist, die Montage der Gurtautomaten. Dies liegt primär darin begründet, daß die Gurte durch in Verkleidungsteilen vorgesehene Schlitze hindurchgeführt werden müssen.

Der Erfindung liegt die Aufgabe zugrunde, eine gattungsgemäße Sicherheitsgurtanordnung zu schaffen, die ohne Beeinträchtigung der Arbeitsweise der Gurtanordnung und ohne zusätzlichen Platzbedarf die beschriebenen Montageschwierigkeiten vermeidet.

Die erfindungsgemäße Lösung dieser Aufgabe besteht in den kennzeichnenden Merkmalen des Hauptanspruchs, vorteilhafte Ausbildungen der Erfindung sind Gegenstand der Unteransprüche.

Die Erfindung löst die definierte Aufgabe also in bestechend einfacher Weise dadurch, daß durch eine zumindest einem der beiden definierten Gurte zugeordnete Einrichtung die sonst über die Gurte vorliegende Kopplung der beiden Gurtautomaten aufgehoben wird. Insbesondere das Durchführen der Gurte durch die ihnen zugeordneten Durchführungsschlitze in Verkleidungsteilen wird also durch die Gurtautomaten nicht behindert, da die definierten Einrichtungen relativ flach gehalten werden können, so daß sie leicht durch die besagten Schlitze hindurchgeführt werden können.

Im folgenden werden das der Erfindung zugrundeliegende Problem sowie zwei Ausführungsbeispiele der Erfindung anhand der Zeichnung erläutert. Dabei zeigt Figur 1 perspektivisch eine Ansicht eines Integralsitzes zwecks Erläuterung der Problematik, während die Figuren 2 und 3 erfindungsgemäße Lösungsvarianten zeigen.

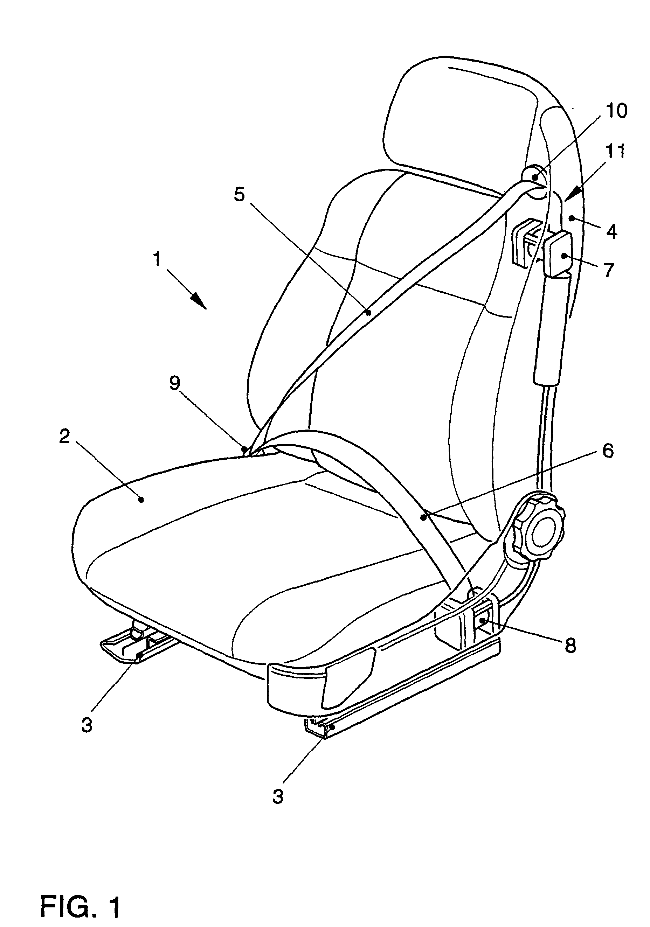

Betrachtet man zunächst Figur 1, so weist der Sitz 1 in üblicher Weise einen eigentlichen Sitzbereich 2, der mit Mitteln zur Längsverstellung des Sitzes in bodenfesten Schienen 3 versehen ist, und den in seiner Neigung verstellbaren Rückenlehnenbereich 4 auf. Der Aufbau des Sitzes ist im einzelnen nicht von Bedeutung, wohl aber die Ausgestaltung der Sicherheitsgurtanordnung: Diese enthält den Schultergurt 5, den Beckengurt 6, diesen individuell zugeordnete Gurtautomaten 7 und 8, die teils an der Seitenwange des Lehnenbereichs, teils am Sitzbereich 2 befestigt sind, sowie das gemeinsame Gurtschloß 9. An dem gurtseitigen Bestandteil des Gurtschlosses 9, beispielsweise einer üblichen Stecklasche, sind die einander zugekehrten Enden der beiden Gurte 5 und 6 festgelegt.

Wie nur bei 10 für den Schultergurt 5 angedeutet, ist es üblich, zumindest einen der Gurte - hier den Schultergurt 5 - durch einen Schlitz in einer Abdeckung 11 hindurchzuführen. Daher macht die Montage zumindest des Gurtautomaten 7 Schwierigkeiten, denn die beiden Gurtautomaten 7 und 8 stehen über die Gurte 5 und 6 sowie den gurtseitigen Bestandteil des Gurtschlosses 9 in Verbindung miteinander.

Die Erfindung beseitigt diese Schwierigkeiten dadurch, daß Einrichtungen vorgesehen sind, die diese Verbindung der beiden Gurtautomaten aufzuheben gestatten.

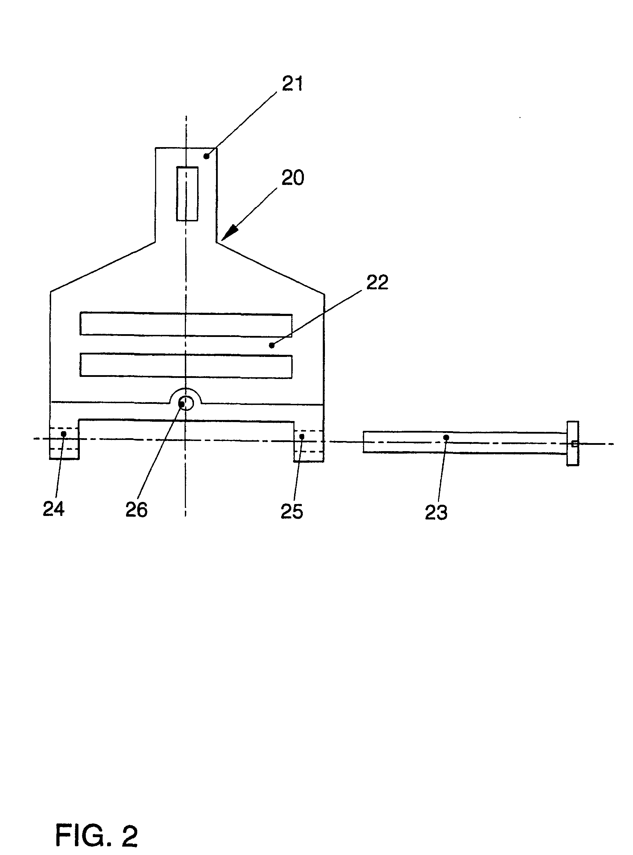

Im Ausführungsbeispiel nach Figur 2 ist eine Stecklasche 20 dargestellt, die den gurtseitigen Bestandteil des in Figur 1 mit 9 bezeichneten gemeinsamen Gurtschlosses bildet. Außer dem in eine fahrzeug- oder sitzfeste Aufnahme einsteckbaren Profilbereich 21, d.h. dem eigentlichen aktiven Schloßbereich der Stecklasche 20, erkennt man den Steg 22 zur Befestigung eines der beiden in Figur 1 mit 5 und 6 bezeichneten Gurte sowie den Gewindebolzen 23, der in das Gewinde 24 der eigentlichen Stecklasche 20 fest eingeschraubt werden kann und zur Festlegung des Endes des jeweils anderen der beiden Gurte 5 und 6 dient. In Figur 2 ist der Gewindebolzen 23 außerhalb der eigentlichen Stecklasche 20 gezeichnet, d.h. in einer Lage, in der er auch aus dem schlaufenförmigen Endbereich des ihm zugeordneten Gurtes herausgezogen ist, so daß durch Trennung der beiden Gurte auch die die Montage hindernde Kopplung zwischen den beiden Automaten 7 und 8 beseitigt ist. Zur Herstellung dieser Verbindung wird das schlaufenförmige Ende des zugehörigen Gurtes in die gabelartige Ausnehmung des unteren Endes der Stecklasche 20 gehalten, der Bolzen 23 in Figur 2 von rechts nach links durch das Durchgangsloch 25 und dieses schlaufenförmige Gurtende hindurchgeführt und sein Gewinde in das stecklaschenseitige Gewindeloch 24 eingeschraubt. Verständlicherweise können noch zusätzliche Sicherungen für den Bolzen 23 in dieser Betriebslage vorgesehen sein.

Statt der Arretierung durch Gewinde kann auch eine solche durch eine zerstörbare Umbördelung vorgesehen sein. -Bei 26 ist ein Schwenkverbindung für die Teile der hier unterteilten Stecklasche 20 angedeutet.

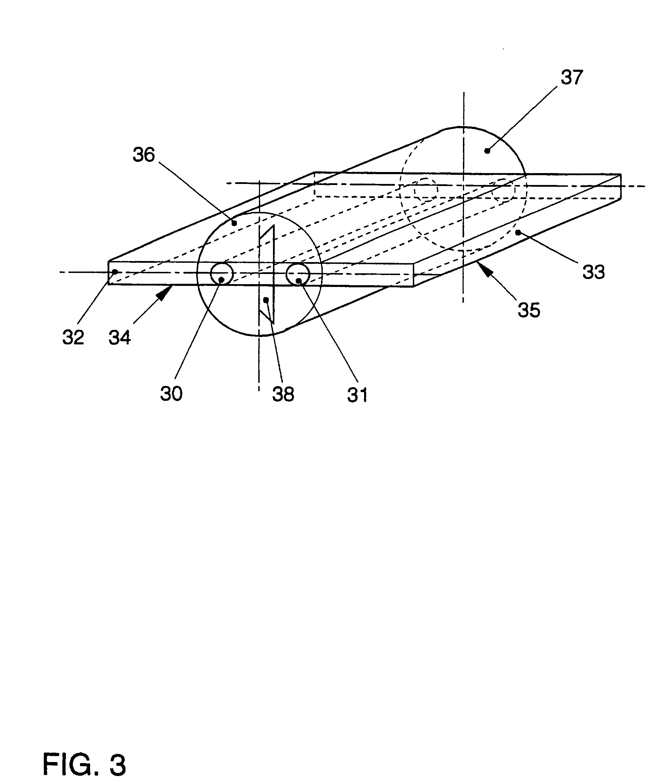

Während in dem Ausführungsbeispiel nach Figur 1 die erfindungsgemäße Einrichtung zur Aufhebung der Verbindung der beiden Automaten 7 und 8 gleichsam in die Stecklasche und damit in den gurtseitigen Schloßbestandteil integriert ist, zeigt Figur 3 perspektivisch eine Einrichtung, die als aufhebbare Kupplung zwischen zwei Gurtlängen ausgebildet ist, die durch Unterteilung eines der beiden Gurte 5 und 6 gewonnen sind. Diesen übrigens in Figur 3 nicht dargestellten Gurtlängen sind wiederum lösbare Stege oder Bolzen 30 und 31 zugeordnet, die nach Bestückung dieser Kupplung mit den Enden der Gurtlängen wiederum schlaufenförmige Endbereiche durchsetzen und die in einer Ebene mit Durchführungsschlitzen 32 und 33 für die Gurtlängen liegen. Die entsprechenden Schlitzgehäuse 34 und 35 sind starr mit Aufnahmen 36 und 37 für die beiden Teile 30 und 31 verbunden. Diese beiden Aufnahmen 36 und 37 stehen in diesem Ausführungsbeispiel über eine Schwalbenschwanzverbindung 38 in fester mechanischer Verbindung. Durch Relatiwerschiebung (beispielsweise durch Überwinden einer Federkraft oder nach Entfernen einer üblichen mechanischen Arretierung, beispielsweise einer Schraubarretierung) können die beiden Aufnahmen 36 und 37 zur Erleichterung der Festlegung der Enden der Gurtlängen getrennt werden.

Mit der Erfindung ist demgemäß auf einfache Weise eine Beseitigung der eingangs beschriebenen Montageschwierigkeiten bei einer Sicherheitsgurtanordnung mit gurtindividuellen Gurtautomaten gewährleistet.

## Patentansprüche

1. Sicherheitsgurtanordnung mit einem Schultergurt (5), Beckengurt (6), beiden gemeinsamem Gurtschloss (9), individuellen Gurtautomaten (7,8) für beide Gurte, sowie zumindest einem der Gurte (5,6) zugeordnete Einrichtungen (23) zum gewollten Aufheben der Verbindung beider Automaten (7,8) durch die Gurte (5,6), **dadurch gekennzeichnet, dass** die Einrichtungen parallel zueinander angeordnete getrennte steg- oder bolzenartige Mittel (22, 23; 30, 31) zum Festlegen jeweils eines Gurtendes oder jeweils eines Endes zweier durch Unterteilung eines der Gurte (5, 6) entstandener Gurtlängen umfassen, und dass zumindest eines dieser Mittel (23; 30, 31) nach Aufhebung einer Arretierung (24) lösbar ist.

2. Anordnung nach Anspruch 1, **dadurch gekennzeichnet, dass** die steg- oder bolzenartigen Mittel (22, 23) an einem gemeinsamen gurtseitigen Bestandteil (20) des Gurtschlosses (9) vorgesehen sind.

3. Anordnung nach Anspruch 1 oder 2, **dadurch gekennzeichnet, dass** das eine Mittel ein Gewindebolzen (23) ist.

4. Anordnung nach Anspruch 2 oder 3, **dadurch gekennzeichnet, dass** der gurtseitige Bestandteil eine Steckzunge (20) ist.

5. Anordnung nach Anspruch 4, **dadurch gekennzeichnet, dass** die beiden stegoder bolzenartigen Mittel (22, 23) hintereinander auf der Steckzunge (20) angeordnet sind.

6. Anordnung nach Anspruch 1, **dadurch gekennzeichnet, dass** die steg- oder bolzenartigen Mittel (22, 23) an einer Kupplungseinrichtung (36, 37) zur aufhebbaren Verbindung der beiden Gurtlängen vorgesehen sind.

7. Anordnung nach Anspruch 6, **dadurch gekennzeichnet, dass** die Kupplungseinrichtung (36, 37) zwei in aufhebbarer Verbindung (38) stehende Kupplungsteile (36, 37) enthält, von denen jedes mit jeweils einem Ende von einer der beiden Gurtlängen verbunden ist.

8. Anordnung nach einem der Ansprüche 1 bis 7, **dadurch gekennzeichnet, dass** die Arretierung zu ihrer Aufhebung zerstörbar ist.

9. Anordnung nach Anspruch 8, **dadurch gekennzeichnet, dass** die Arretierung durch eine Umbördelung gebildet ist.

## Claims

1. Seat-belt arrangement having a shoulder belt (5), a lap belt (6), a belt buckle (9) common to both belts, individual automatic belt devices (7, 8) for both belts, and devices (23) assigned to at least one of the belts (5, 6) for the intentional withdrawal of the connection between both automatic devices (7, 8) by the belts (5, 6), **characterized in that** the devices comprise separate web- or bolt-like means (22, 23; 30, 31) which are arranged parallel to one another and are intended for the securing in each case of one belt end or in each case of one end of two belt lengths produced by dividing one of the belts (5, 6), and **in that** at least one of these means (23; 30, 31) can be released after withdrawal of a retaining means (24).

2. Arrangement according to Claim 1, **characterized in that** the web- or bolt-like means (22, 23) are provided on a common belt-side component (20) of the belt buckle (9).

3. Arrangement according to Claim 1 or 2, **characterized in that** the one means is a threaded bolt (23).

4. Arrangement according to Claim 2 or 3, **characterized in that** the belt-side component is a plug-in tongue (20).

5. Arrangement according to Claim 4, **characterized in that** the two web- or bolt-like means (22, 23) are arranged one behind the other on the plug-in tongue (20).

6. Arrangement according to Claim 1, **characterized in that** the web- or bolt-like means (22, 23) are provided on a coupling device (36, 37) for the withdrawable connection between the two belt lengths.

7. Arrangement according to Claim 6, **characterized in that** the coupling device (36, 37) contains two coupling parts (36, 37) which are in withdrawable connection (38) and each of which is connected to in each case one end of one of the two belt lengths.

8. Arrangement according to one of Claims 1 to 7, **characterized in that** the retaining means can be destroyed in order to withdraw it.

9. Arrangement according to Claim 8, **characterized in that** the retaining means is formed by a flanged area.

## Revendications

1. Dispositif de ceinture de sécurité comportant une ceinture à sangle ventrale (5), une ceinture à sangle abdominale (6), une attache de ceinture (9) commune aux deux ceintures (5, 6), des automates de ceinture individuels (7, 8) pour les deux ceintures ainsi que des organes (23) associés à au moins l'une des ceintures (5, 6) afin de supprimer volontairement le raccordement des deux automates (7, 8) par les ceintures (5, 6), **caractérisé en ce que** les organes comprennent des moyens de type entretoise ou boulon (22, 23 ; 30, 31) disposés parallèlement les uns par rapport aux autres destinés à fixer à chaque fois une extrémité de ceinture ou à chaque fois une extrémité de deux longueurs de ceinture produites par subdivision de l'une des ceintures (5, 6), et **en ce que** l'un de ces moyens (23 ; 30, 31) est amovible après déblocage d'un dispositif d'arrêt (24).

2. Dispositif selon la revendication 1, **caractérisé en ce que** les moyens du type entretoise ou boulon (22,23) sont prévus sur une partie constitutive commune (20) de l'attache de ceinture (9), située côté ceinture.

3. Dispositif selon la revendication 1 ou 2, **caractérisé en ce qu'**un moyen est un boulon fileté (23).

4. Dispositif selon la revendication 2 ou 3, **caractérisé en ce que** la partie constitutive située côté ceinture est une languette d'insertion (20).

5. Dispositif selon la revendication 4, **caractérisé en ce que** les deux moyens du type entretoise ou boulon (22, 23) sont disposés l'un derrière l'autre sur la languette d'insertion (20).

6. Dispositif selon la revendication 1, **caractérisé en ce que** les moyens du type entretoise ou boulon (22, 23) sont prévus sur un organe de couplage (36, 37) pour un raccordement des deux longueurs de ceinture, qui peut être supprimé.

7. Dispositif selon la revendication 6, **caractérisé en ce que** l'organe de couplage (36, 37), comporte deux pièces de couplage (36, 37) dont le raccordement (38) peut être supprimé, chacune desdites pièces de couplage étant raccordée à chaque fois à une extrémité de l'une des deux longueurs de ceinture.

8. Dispositif selon l'une quelconque des revendications 1 à 7, **caractérisé en ce que** le dispositif d'arrêt est destructible en vue de son déblocage.

9. Dispositif selon la revendication 8, **caractérisé en ce que** le dispositif d'arrêt est conformé par un rabattement.
